# EUROPEAN PATENT APPLICATION

(11) **EP 4 407 882 A1**
(43) Date of publication of application: **31.07.2024**
(21) Application number: 21957762.4
(22) Date of filing: 22.09.2021
(51) Int. Cl.: H04B 7/02

(54) **METHOD AND APPARATUS FOR BEAM MEASUREMENT AND REPORTING**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2021/119700
(87) International publication number: WO 2023/044621

(57) **Abstract**

Disclosed in embodiments of the present disclosure are a method and apparatus for beam measurement and reporting, which may be applied to the technical field of communications. The method executed by a terminal device comprises: receiving configuration information, the configuration information comprising at least two reference signal resources, and the at least two reference signal resources each corresponding to different remote radio heads. Therefore, the terminal device can perform beam measurement and reporting according to the reference signal resource configured for each remote radio head by a network device, thereby not only ensuring a signal coverage range, but also increasing a remote radio head utilization rate.

## Description

### TECHNICAL FIELD

The disclosure relates to the field of communication technology, more particularly, to a method and an apparatus for beam measurement and reporting.

### BACKGROUND

In a communication system, beam-based information transmission and reception is required in order to ensure a signal coverage in the case of fast attenuation of a high-frequency channel. In the related art, beam measurement and reporting of two Transmission Reception Points (TRPs) are considered. For one resource setting, two channel measurement resource sets (CMR resource sets) are configured for channel measurement resources, with each CMR resource set corresponding to one TRP.

When a network device contains multiple Remote Radio Heads (RRHs), the multiple RRHs can simultaneously provide services for the terminal. Therefore, how to perform beam measurement and reporting based on the multiple RRHs is an urgent problem that needs to be solved.

### SUMMARY

Embodiments of the disclosure provide a method and an apparatus for beam measurement and reporting, which can be used in the field of communication technology.

According to a first aspect, embodiments of the disclosure provide a method for beam measurement and reporting, performed by a terminal. The method includes: receiving configuration information, in which the configuration information includes at least two reference signal resources, and the at least two reference signal resources correspond to different remote radio heads respectively.

Optionally, the different remote radio heads correspond to at least one of: different transmission and reception points; different control resource set pools; or different antenna panels.

Optionally,
the configuration information includes one resource setting, in which the resource setting is associated with a plurality of channel measurement resource (CMR) resource sets, the plurality of CMR resource sets are in a one-to-one correspondence with the plurality of remote radio heads, and the reference signal resources corresponding to different remote radio heads are included in different CMR resource sets in the plurality of CMR resource sets;
or the configuration information includes a plurality of resource settings, in which each resource setting is associated with one CMR resource set, the plurality of resource settings are in a one-to-one correspondence with the plurality of remote radio heads, and reference signal resources corresponding to different remote radio heads are included in CMR resource sets associated with different resource settings in the plurality of resource settings;
or the configuration information includes one resource setting, in which the resource setting is associated with one CMR resource set, in which the CMR resource set includes a plurality of CMR resource subsets, the plurality of CMR resource subsets are in a one-to-one correspondence with the plurality of remote radio heads, and reference signal resources corresponding to different remote radio heads are included in different CMR resource subsets in the plurality of CMR resource subsets.

Optionally, the method further includes:
receiving first indication information, in which the first indication information is used to implement at least one of:
activating or deactivating M CMR resource sets;
activating or deactivating M CMR resource subsets;
activating or deactivating M resource settings;
indicating M CMR resource sets;
indicating M CMR resource subsets; or
indicating M resource settings; in which, M is a positive integer greater than or equal to 1.

Optionally, the method further includes:
sending a first measurement result report;
in which the first measurement result report includes a plurality of groups, N reference signals (RSs) in each group are able to be simultaneously received by the terminal, N is a positive integer greater than or equal to 2, and different reference signals in the N reference signals correspond to different remote radio heads; or the first measurement result report includes a plurality of groups, and reference signals in different groups are able to be simultaneously received by the terminal.

Optionally,
the configuration information includes a plurality of resource settings, in which each resource setting includes two CMR resource sets, the two CMR resource sets are in a one-to-one correspondence with two remote radio heads, and at least one reference signal resource corresponding to different remote radio heads are contained in different CMR resource sets in the two CMR resource sets respectively;
or the configuration information includes a plurality of resource settings, in which each resource setting includes one CMR resource set, the CMR resource set includes two CMR resource subsets, the two CMR resource subsets are in a one-to-one correspondence with two remote radio heads, and at least one reference signal resource corresponding to different remote radio heads are contained in different CMR resource subsets in the two CMR resource subsets respectively.

Optionally, the method further includes:
receiving second indication information, in which the second indication information is used to implement at least one of:
activating or deactivating a resource associated with any resource setting; or
indicating a resource associated with any resource setting.

Optionally, the method further includes:
sending a second measurement result report, in which the second measurement result report includes an identifier of at least one resource setting and a measurement result corresponding to each resource setting.

Optionally,
the measurement result corresponding to each resource setting includes a plurality of groups, and two reference signals in each group are able to be simultaneously received by the terminal, in which different reference signals in the two reference signals correspond to different remote radio heads;
or the measurement result corresponding to each resource setting includes a plurality of groups, and reference signals in different groups are able to be simultaneously received by the terminal.

Optionally, the measurement result includes an index of a reference signal and a corresponding measurement value, the reference signal includes a synchronization signal block (SSB) or a channel state information-reference signal (CSI-RS), the measurement value includes a layer-1 reference signal reception power (L1-RSRP) or a layer-1 signal to interference noise ratio (L1-SINR).

Optionally, different remote radio heads correspond to a same physical cell identifier (PCI), or different remote radio heads correspond to different PCIs.

According to a second, embodiments of the disclosure provide a method for beam measurement and reporting, performed by a network device. The method includes: sending configuration information, in which the configuration information includes at least two reference signal resources, and the at least two reference signal resources correspond to different remote radio heads respectively.

Optionally, the different remote radio heads correspond to at least one of: different transmission and reception points; different control resource set pools; or different antenna panels.

Optionally,
the configuration information includes one resource setting, in which the resource setting is associated with a plurality of channel measurement resource (CMR) resource sets, the plurality of CMR resource sets are in a one-to-one correspondence with the plurality of remote radio heads, and reference signal resources corresponding to different remote radio heads are included in different CMR resource sets in the plurality of CMR resource sets;
or the configuration information includes a plurality of resource settings, in which each resource setting is associated with one CMR resource set, the plurality of resource settings are in a one-to-one correspondence with the plurality of remote radio heads, and reference signal resources corresponding to different remote radio heads are included in CMR resource sets associated with different resource settings in the plurality of resource settings;
or the configuration information includes one resource setting, in which the resource setting is associated with one CMR resource set, in which the CMR resource set includes a plurality of CMR resource subsets, the plurality of CMR resource subsets are in a one-to-one correspondence with the plurality of remote radio heads, and reference signal resources corresponding to different remote radio heads are included in different CMR resource subsets in the plurality of CMR resource subsets.

Optionally, the method further includes:
sending first indication information, in which the first indication information is used to implement at least one of:
activating or deactivating M CMR resource sets;
activating or deactivating M CMR resource subsets;
activating or deactivating M resource settings;
indicating M CMR resource sets;
indicating M CMR resource subsets; or
indicating M resource settings; in which, M is a positive integer greater than or equal to 1.

Optionally, the method further includes:
receiving a first measurement result report;
in which the first measurement result report includes a plurality of groups, N reference signals (RSs) in each group are able to be simultaneously received by the terminal, N is a positive integer greater than or equal to 2, and different reference signals in the N reference signals correspond to different remote radio heads; or the first measurement result report includes a plurality of groups, and reference signals in different groups are able to be simultaneously received by the terminal.

Optionally,
the configuration information includes a plurality of resource settings, in which each resource setting includes two CMR resource sets, the two CMR resource sets are in a one-to-one correspondence with two remote radio heads, and at least one reference signal resource corresponding to different remote radio heads are contained in different CMR resource sets in the two CMR resource sets respectively;
or the configuration information includes a plurality of resource settings, in which each resource setting includes one CMR resource set, the CMR resource set includes two CMR resource subsets, the two CMR resource subsets are in a one-to-one correspondence with two remote radio heads, and at least one reference signal resource corresponding to different remote radio heads are contained in different CMR resource subsets in the two CMR resource subsets respectively.

Optionally, the method further includes:
sending second indication information, in which the second indication information is used to implement at least one of:
activating or deactivating a resource associated with any resource setting; or
indicating a resource associated with any resource setting.

Optionally, the method further includes:
receiving a second measurement result report, in which the second measurement result report includes an identifier of at least one resource setting and a measurement result corresponding to each resource setting.

Optionally, the measurement result corresponding to each resource setting includes a plurality of groups, and two reference signals in each group are able to be simultaneously received by the terminal, in which different reference signals in the two reference signals correspond to different remote radio heads;
or the measurement result corresponding to each resource setting includes a plurality of groups, and reference signals in different groups are able to be simultaneously received by the terminal.

Optionally, the measurement result includes an index of a reference signal and a corresponding measurement value, the reference signal includes a synchronization signal block (SSB) or a channel state information-reference signal (CSI-RS), the measurement value includes a layer-1 reference signal reception power (L1-RSRP) or a layer-1 signal to interference noise ratio (L1-SINR).

Optionally, different remote radio heads correspond to a same physical cell identifier (PCI), or different remote radio heads correspond to different PCIs.

According to a third aspect, embodiments of the disclosure provide a communication device, performed by a terminal. The communication device has an ability to implement part or all of the functions of the terminal in the method described in the first aspect. For example, the functions of the communication device may include functions in some or all of the embodiments of the disclosure, or may include a function of independently implementing any embodiment of the disclosure. The functions can be implemented by hardware, or can be implemented by executing corresponding software using the hardware. The hardware or software includes one or more units or modules corresponding to the above functions.

According to a fourth aspect, embodiments of the disclosure provide a communication device, performed by a network device. The communication device has an ability to implement part or all of the functions of the network device in the method described in the second aspect. For example, the functions of the communication device may include functions in some or all of the embodiments of the disclosure, or may include a function of independently implementing any embodiment of the disclosure. The functions can be implemented by hardware, or can be implemented by executing corresponding software using the hardware. The hardware or software includes one or more units or modules corresponding to the above functions.

According to a fifth aspect, embodiments of the disclosure provide a communication device. The communication device includes: a processor. When the processor calls a computer program stored in a memory, the method described in the first aspect above is implemented.

According to a sixth aspect, embodiments of the disclosure provide a communication device. The communication device includes: a processor. When the processor calls a computer program stored in a memory, the method described in the second aspect above is implemented.

According to a seventh aspect, embodiments of the disclosure provide a communication device. The communication device includes: a processor and a memory having a computer program stored thereon. When the computer program is executed by the processor, the communication device is caused to implement the method described in the first aspect above.

According to an eighth aspect, embodiments of the disclosure provide a communication device. The communication device includes: a processor and a memory having a computer program stored thereon. When the computer program is executed by the processor, the communication device is caused to implement the method described in the second aspect above.

According to a ninth aspect, embodiments of the disclosure provide a communication device. The communication device includes: a processor and an interface circuit. The interface circuit is configured to receive code instructions and transmit them to the processor. The processor is configured to run the code instructions to cause the device to perform the method described in the first aspect above.

According to a tenth aspect, embodiments of the disclosure provide a communication device. The communication device includes: a processor and an interface circuit. The interface circuit is configured to receive code instructions and transmit them to the processor. The processor is configured to run the code instructions to cause the device to perform the method described in the second aspect above.

According to an eleventh aspect, embodiments of the disclosure provide a communication system. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

According to a twelfth aspect, embodiments of the disclosure provide a computer-readable storage medium for storing instructions used by the above terminal. When the instructions are executed, the method of the first aspect is implemented.

According to a thirteenth aspect, embodiments of the disclosure provide a computer-readable storage medium for storing instructions used by the above network device. When the instructions are executed, the method of the second aspect is implemented.

According to a fourteenth aspect, embodiments of the disclosure provide a computer program product including a computer program. When the computer program is run by a computer, the computer is caused to implement the method of the first aspect.

According to a fifteenth aspect, embodiments of the disclosure provide a computer program product including a computer program. When the computer program is run by a computer, the computer is caused to implement the method of the second aspect.

According to a sixteenth aspect, embodiments of the disclosure provide a chip system. The chip system includes at least one processor and an interface, to support a terminal in implementing the functions involved in the first aspect, such as determining or processing at least one of the data and information involved in the above method. In a possible design, the chip system further includes a memory for storing necessary computer programs and data for the terminal. The chip system can be composed of chips or include a chip and other discrete components.

According to a seventeenth aspect, embodiments of the disclosure provide a chip system. The chip system includes at least one processor and an interface, to support a network device in implementing the functions involved in the second aspect, such as determining or processing at least one of the data and information involved in the above method. In a possible design, the chip system further includes a memory for storing necessary computer programs and data for the network device. The chip system can be composed of chips or include a chip and other discrete components.

According to an eighteenth aspect, embodiments of the disclosure provide a computer program. When the computer program runs on a computer, the computer is caused to implement the method of the first aspect.

According to a nineteenth aspect, embodiments of the disclosure provide a computer program. When the computer program runs on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a structural diagram of a communication system provided by an embodiment of the disclosure.
FIG. 2 is a flowchart of a method for beam measurement and reporting provided by an embodiment of the disclosure.
FIG. 3 is a flowchart of a method for beam measurement and reporting provided by another embodiment of the disclosure.
FIG. 4 is a flowchart of a method for beam measurement and reporting provided by another embodiment of the disclosure.
FIG. 5 is a flowchart of a method for beam measurement and reporting provided by another embodiment of the disclosure.
FIG. 6 is a flowchart of a method for beam measurement and reporting provided by another embodiment of the disclosure.
FIG. 7 is a flowchart of a method for beam measurement and reporting provided by another embodiment of the disclosure.
FIG. 8 is a flowchart of a method for beam measurement and reporting provided by another embodiment of the disclosure.
FIG. 9 is a flowchart of a method for beam measurement and reporting provided by another embodiment of the disclosure.
FIG. 10 is a flowchart of a method for beam measurement and reporting provided by another embodiment of the disclosure.
FIG. 11 is a flowchart of a method for beam measurement and reporting provided by another embodiment of the disclosure.
FIG. 12 is a block diagram of a communication device provided by an embodiment of the disclosure.
FIG. 13 is a block diagram of a communication device provided by another embodiment of the disclosure.
FIG. 14 is a schematic diagram of a chip provided by an embodiment of the disclosure.

### DETAILED DESCRIPTION

For ease of understanding, terms involved in this disclosure are first introduced.

### 1. Remote radio head (RRH)

At a far end, a baseband optical signal is converted into a radio frequency signal to amplify and transmit. It is also known as a Remote Radio Unit (RRU).

In order to better understand a method for beam measurement and reporting disclosed in embodiments of the disclosure,
a communication system used in embodiments of the disclosure is firstly described below.

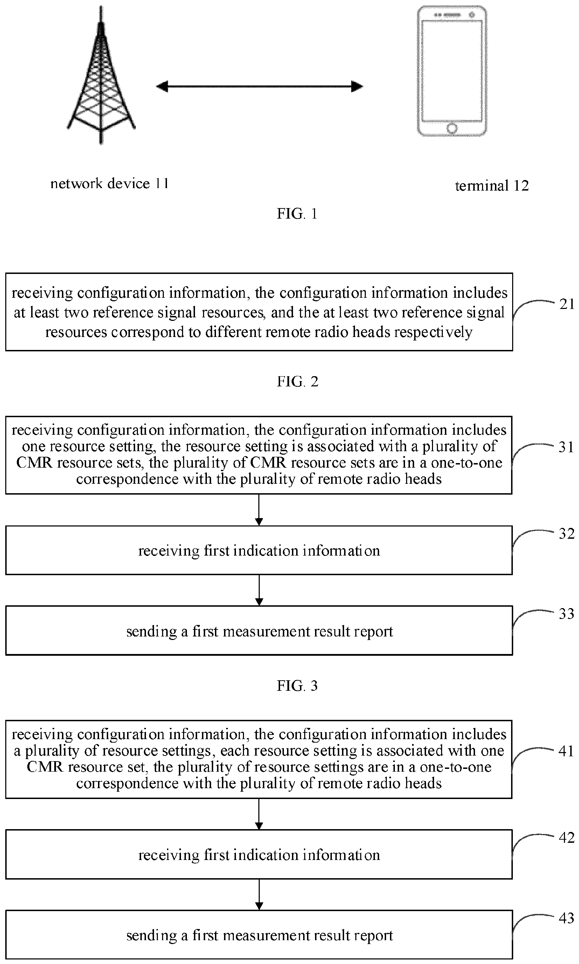

As illustrated in FIG. 1, FIG. 1 is a structural diagram of a communication system provided by an embodiment of the disclosure. The communication system may include, but is not limited to, a network device and a terminal. The number and form of devices shown in FIG. 1 are only for examples and do not constitute a limitation on the embodiments of the disclosure, and two or more network devices and two or more terminals may be included in practical applications. The communication system shown in FIG. 1 may include, for example, a network device 11 and a terminal 12.

It is noted that a technical solution of embodiments of the disclosure may be applied to various communication systems, such as, a long-term evolution (LTE) system, a fifth generation (5G) mobile communication system, a 5G new radio (NR) system, or other future new mobile communication systems.

The network device 11 in embodiments of the disclosure may be an entity on a network side for transmitting or receiving signals. For example, the network device 11 may be an evolved NodeB (eNB), a transmission reception point (TRP), a next generation NodeB (gNB) in a new radio (NR) system, a base station in other future mobile communication systems or an access node in a wireless fidelity (Wi-Fi) system. The specific technology and specific device form used by the network device are not limited in the embodiments of the disclosure. The network device provided in embodiments of the disclosure may be composed of a central unit (CU) and distributed units (DUs). The CU can also be referred to as a control unit. Using the CU-DU structure, a protocol layer of the network device, such as a base station, can be separated, with some protocol layer functions placed in the CU for centralized control, and part of or all the remaining protocol layer functions distributed in the DUs, DUs are centrally controlled by the CU.

The terminal 12 in embodiments of the disclosure is an entity on a user side for receiving or transmitting signals, such as a cellular phone. The terminal may also be referred to as a terminal device, user equipment (UE), a mobile station (MS), a mobile terminal (MT), and the like. The terminal may be a vehicle with a communication function, a smart car, a mobile phone, a wearable device, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in embodiments of the disclosure.

It is understood that the communication system described in the embodiments of the disclosure is intended to more clearly illustrate the technical solutions of the embodiments of the disclosure, and does not constitute a limitation on the technical solutions provided by the embodiments of the disclosure. It is understood by those skilled in the art that as the system architecture evolves and new service scenarios emerge, the technical solutions provided by the embodiments of the disclosure are also applicable to similar technical problems.

Following is a detailed introduction of a method and an apparatus for beam measurement and reporting provided in this disclosure with reference to the accompany drawings.

As shown in FIG. 2, FIG. 2 is a flowchart of a method for beam measurement and reporting according to an embodiment of the disclosure. The method is performed by a terminal. As shown in FIG. 2, the method includes, but is not limited to, the following steps.

Step 21, configuration information is received, the configuration information includes at least two reference signal resources, and the at least two reference signal resources correspond to different remote radio heads respectively.

It can be understood that in a case where a network device includes multiple RRHs, the network device may configure different reference signal resources for the multiple RRHs. At the same time, each RRH has a corresponding reference signal resource. Thus, beam measurement and reporting may be performed based on the reference signal resource corresponding to each RRH.

Optionally, different RRHs may correspond to at least one of: different transmission reception points (TRPs), different control resource set pools (CORESET Pool Indexes), or different antenna panels. That is to say, in embodiments of the disclosure, a RRH may be interchanged with a TRP, a CORESET Pool Index, or an antenna panel.

Optionally, different RRHs may correspond to the same Physical Cell Identifier (PCI), or different RRHs may correspond to different PCIs, which is not limited by the disclosure.

By implementing the embodiments of the disclosure, the terminal receives the configuration information, the configuration information includes at least two reference signal resources, and the at least two reference signal resources correspond to different RRHs. In this way, the terminal can perform beam measurement and reporting based on the reference signal resource configured by the network device for each RRH, which not only ensures a coverage range of signals but also improves a utilization rate of the RRH.

As shown in FIG. 3, FIG. 3 is a flowchart of a method for beam measurement and reporting according to an embodiment of the disclosure. The method is performed by a terminal. As shown in FIG. 3, the method includes, but is not limited to, the following steps.

Step 31, configuration information is received, the configuration information includes one resource setting, the resource setting may be associated with a plurality of channel measurement resource (CMR) resource sets, and the plurality of CMR resource sets are in a one-to-one correspondence with the plurality of remote radio heads.

It should be noted that the reference signal resources corresponding to different RRHs are included in different CMR resource sets in the plurality of CMR resource sets, and the reference signal resource corresponding to the same RRH is included in the same CMR resource set. Each RRH corresponds to at least one reference signal resource.

Optionally, the plurality of CMR resource sets include two or more CMR resource sets.

It can be understood that each reference signal resource in the configuration information is included in one CMR resource set, and different reference signal resources may be included in the same CMR resource set or in different CMR resource sets.

For example, the configuration information includes a resource setting # 1, which is associated with CMR resource set 1, CMR resource set 2, and CMR resource set 3. The CMR resource set 1 corresponds to RRH 1, the CMR resource set 2 corresponds to RRH 2, and the CMR resource set 3 corresponds to RRH 3. At least one reference signal resource corresponding to RRH 1 may be included in the CMR resource set 1, at least one reference signal resource corresponding to RRH 2 may be included in the CMR resource set 2, and at least one reference signal resource corresponding to RRH 3 may be included in the CMR resource set 3, respectively. That is to say, the CMR resource set 1 includes at least one reference signal resource, and all reference signal resources included in the CMR resource set 1 correspond to the RRH 1. The CMR resource set 2 includes at least one reference signal resource, and all reference signal resources included in the CMR resource set 2 correspond to the RRH 2. The CMR resource set 3 includes at least one reference signal resource, and all reference signal resources included in the CMR resource set correspond to the RRH 3.

Step 32, first indication information is received.

Optionally, the first indication information may be used to implement least one of:
activating or deactivating M CMR resource sets; or
indicating M CMR resource sets; where, M is a positive integer greater than or equal to 1.

It can be understood that M is a value less than or equal to the CMR resource set configured in the configuration information.

Optionally, the first indication information may be Medium Access Control (MAC) Control Element (CE) information sent by a network device. The terminal may determine whether to activate or deactivate the M CMR resource sets according to the MAC CE information.

Optionally, the network device may activate or deactivate the M CMR resource sets through MAC CE, or through activating or activating a reportconfig (report configuration) associated with the M CMR resource sets.

Or, the first indication information may be downlink control information (DCI) sent by the network device. The terminal may determine, based on the DCI, to perform measurement and reporting based on the M CMR resource sets.

Optionally, the network device may indicate to perform the measurement reporting based on the M CMR resource sets through the DCI, or it can be achieved by indicating a reportconfig associated with the M CMR resource sets.

After determining an available CMR resource set, the terminal may perform beam measurement for the RRHs.

Step 33, a first measurement result report is sent.

Optionally, the first measurement result report may include multiple groups, N reference signals (RSs) in each group are RSs that the terminal can receive simultaneously.

N is a positive integer greater than or equal to 2, and different RSs in the N RSs correspond to different RRHs. The N RSs may correspond to two or more different RRHs, such as three, four, etc., which is not limited in the disclosure.

Or, the first measurement result report may include multiple groups, and RSs in different groups are RSs that the terminal can receive simultaneously.

For example, there are four RRHs, namely RRH 1, RRH 2, RRH 3, and RRH 4. Two RSs obtained from any two groups, such as Group 1 and Group 2, may correspond to RRH 1 and RRH 2 respectively, or RRH 1 and RRH 3 respectively, or RRH 1 and RRH 4 respectively, or RRH 2 and RRH 3 respectively, or RRH 2 and RRH 4 respectively, or RRH 3 and RRH 4 respectively, which is not limited in the disclosure.

Optionally, the first measurement result report may include a RS index and a corresponding measurement value. The RS includes a Synchronization Signal Block (SSB) or a Channel State Information Reference Signal (CSI-RS). The measurement value includes a layer-1 Reference Signal Receiving Power (L1-RSRP) or a layer-1 Signal to Interference Plus Noise Ratio (L1-SINR).

By implementing the embodiments of the disclosure, the terminal may first receive the configuration information, then determine the CMR resource set corresponding to each RRH according to one resource setting associated with multiple CMR resource sets in the configuration information. Then, beam measurement is determined to be performed based on M CMR resource sets based on the received first indication information, and finally the first measurement result report is sent to the network device. In this way, the beam measurement and reporting for multiple RRHs are realized, which not only ensures a coverage range of signals, but also improves a utilization rate of the RRH.

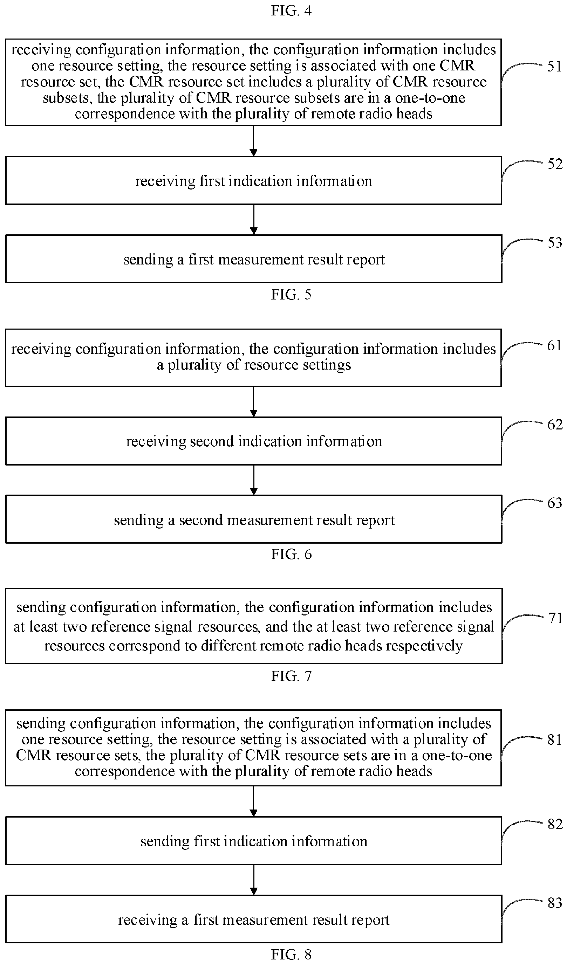

As shown in FIG. 4, FIG. 4 is a flowchart of a method for beam measurement and reporting according to an embodiment of the disclosure. The method is performed by a terminal. As shown in FIG. 4, the method includes, but is not limited to, the following steps.

Step 41, configuration information is received, the configuration information includes multiple resource settings, each resource setting is associated with one CMR resource set, and the multiple resource settings are in a one-to-one correspondence with multiple RRHs.

The reference signal resources corresponding to different RRHs are included in CMR resource sets associated with different resource settings in the multiple resource settings, and the reference signal resources corresponding to the same RRH are included in the same CMR resource set. Each RRH corresponds to at least one reference signal resource.

Optionally, multiple resource settings may include two or more resource settings.

It can be understood that each reference signal resource in the configuration information is included in one CMR resource set, and different reference signal resources are included in the same CMR resource set or in different CMR resource sets.

For example, the configuration information includes multiple resource settings, namely resource setting # 1, resource setting # 2, and resource setting # 3. The resource setting # 1 is associated with CMR resource set 1, the resource setting # 2 is associated with CMR resource set 2, and the resource setting # 3 is associated with CMR resource set 3. The resource setting # 1 corresponds to RRH 1, the resource setting # 2 corresponds to RRH 2, and the resource setting # 3 corresponds to RRH 3. At least one reference signal resource corresponding to RRH 1 may be included in the CMR resource set 1, at least one reference signal resource corresponding to RRH 2 may be included in CMR resource set 2, and at least one reference signal resource corresponding to RRH 3 may be included in CMR resource set 3, respectively. That is to say, the CMR resource set 1 includes at least one reference signal resource, and all reference signal resources included in the CMR resource set 1 correspond to the RRH 1; the CMR resource set 2 includes at least one reference signal resource, and all reference signal resources included in the CMR resource set 2 correspond to the RRH 2; the CMR resource set 3 includes at least one reference signal resource, and all reference signal resources included in the CMR resource set 3 correspond to the RRH 3.

Step 42, first indication information is received.

Optionally, the first indication information is used to implement at least one of:
activating or deactivating M resource settings; or
indicating M resource settings; M is a positive integer greater than or equal to 1.

It can be understood that M is a value less than or equal to the resource setting included in the configuration information.

Optionally, the first indication information may be MAC CE information sent by a network device. The terminal may determine to activate or deactivate the M resource settings according to the MAC CE information.

Optionally, the network device may activate or deactivate the M resource settings through MAC CE, or through activating or activating a reportconfig (report configuration) associated with the M resource settings.

Or, the first indication information may be DCI sent by the network device. The terminal may determine, according to the DCI, to perform measurement and reporting based on the M resource settings.

Optionally, the network devices indicates to perform the measurement based on the M resource settings through DCI, or by indicating a reportconfig associated with the M resource settings.

After determining an available resource setting, the terminal may perform a beam measurement for the RRHs.

Step 43, a first measurement result report is sent.

Optionally, the first measurement result report may include multiple groups, and N reference signals (RSs) in each group are RSs that the terminal can receive simultaneously.

N is a positive integer greater than or equal to 2, and different RSs in the N RSs correspond to different RRHs.

Optionally, the N RSs may correspond to two or more different RRHs, such as three, four, etc., which is not limited in the disclosure.

Or, the first measurement result report may include multiple groups, and the RSs in different groups are RSs that the terminal can receive simultaneously.

For example, there are four RRHs, namely RRH 1, RRH 2, RRH 3, and RRH 4. Two RSs obtained from any two groups, such as Group 1 and Group 2, may correspond to RRH 1 and RRH 2 respectively, or RRH 1 and RRH 3 respectively, or RRH 1 and RRH 4 respectively, or RRH 2 and RRH 3 respectively, or RRH 2 and RRH 4 respectively, or RRH3 and RRH4 respectively, which is not limited in the disclosure.

Optionally, the first measurement result report may include a RS index and a corresponding measurement value. The RS includes a SSB or a CSI-RS, and the measurement value includes a L1 -RSRP or a L1 -SINR.

By implementing the embodiments of the disclosure, the terminal may first receive the configuration information, then determine the resource setting corresponding to each RRH according to each resource setting associated with the CMR resource set in the configuration information, and then determine to perform the beam measurement based on the M resource settings based on the received first indication information. Finally, the terminal sends the first measurement result report to the network device. In this way, the beam measurement and reporting for multiple RRHs are realized, which not only ensures a coverage range of signals, but also improves a utilization rate of the RRHs.

As shown in FIG. 5, FIG. 5 is a flowchart of a method for beam measurement and reporting according to an embodiment of the disclosure. The method is performed by a terminal. As shown in FIG. 5, the method includes, but is not limited to, the following steps.

Step 51, configuration information is received, the configuration information includes one resource setting, the resource setting is associated with one CMR resource set, the CMR resource set includes multiple CMR resource subsets, and multiple CMR resource subsets are in a one-to-one correspondence with multiple RRHs.

Reference signal resources corresponding to different RRHs are included in different CMR resource subsets of the multiple CMR resource subsets. Reference signal resources corresponding to the same RRH are included in the same CMR resource subset. Each RRH corresponds to at least one reference signal resource.

Optionally, multiple CMR resource subsets include two or more CMR resource subsets.

It can be understood that each reference signal resource in the configuration information is included in one CMR resource subset, and different reference signal resources are included in the same CMR resource subset or in different CMR resource subsets.

For example, the configuration information includes one resource setting that is associated with one CMR resource set. The CMR resource set includes CMR resource subset 1, CMR resource subset 2, and CMR resource subset 3. The CMR resource subset 1 corresponds to RRH 1, the CMR resource subset 2 corresponds to RRH 2, and the CMR resource subset 3 corresponds to RRH 3. At least one reference signal resource corresponding to RRH 1 may be included in the CMR resource subset 1, at least one reference signal resource corresponding to RRH 2 may be included in the CMR resource subset 2, and at least one reference signal resource corresponding to RRH 3 may be included in the CMR resource subset 3, respectively. That is to say, the CMR resource subset 1 includes at least one reference signal resource, and all reference signal resources included in the CMR resource subset 1 correspond to RRH 1; the CMR resource subset 2 includes at least one reference signal resource, and all reference signal resources included in the CMR resource subset 2 correspond to RRH 2; the CMR resource subset 3 includes at least one reference signal resource, and all reference signal resources included in the CMR resource subset 3 correspond to RRH 3.

Step 52, first indication information is received.

Optionally, the first indication information is used to implement at least one of:
activating or deactivating M CMR resource subsets; or
indicating M CMR resource subsets; M is a positive integer greater than or equal to 1.

It can be understood that M is a value less than or equal to the CMR resource subset included in the configuration information.

Optionally, the first indication information may be MAC CE information sent by a network device. The terminal may determine whether to activate or deactivate the M CMR resource subsets according to the MAC CE information.

Optionally, the network device may activate or deactivate the M resource subsets through the MAC CE, or through activating or deactivating a reportconfig (report configuration) associated with the M resource subsets.

Or, the first indication information can also be a DCI sent by the network device. At this time, the terminal may determine, based on the DCI, to perform the measurement and reporting based on the M CMR resource subsets.

Optionally, the network device may indicate to perform the measurement based on the M resource subsets through the DCI, or by indicating a reportconfig associated with the M resource subsets.

After determining an available CMR resource subset, the terminal may perform the beam measurement for the RRHs.

Step 53, a first measurement result report is sent.

The specific implementation of step 53 may refer to the detailed description in other embodiments of the disclosure, and will not be elaborated here.

By implementing the embodiments of the disclosure, the terminal may first receive the configuration information, then determine the CMR resource subset corresponding to each RRH based on the one resource setting associated with the multiple CMR resource subsets in the configuration information, and then determine to perform the beam measurement based on M CMR resource subsets according to the received first indication information. Finally, the terminal sends the first measurement result report to the network device. In this way, the beam measurement and reporting for multiple RRHs are realized, which not only ensures a coverage range of the signals, but also improves a utilization rate of the RRHs.

As shown in FIG. 6, FIG. 6 is a flowchart of a method for beam measurement and reporting according to an embodiment of the disclosure. The method is performed by a terminal. As shown in FIG. 6, the method includes, but is not limited to, the following steps.

Step 61, configuration information is received, and the configuration information includes multiple resource settings.

Optionally, each resource setting may include two CMR resource sets. The two CMR resource sets are in a one-to-one correspondence with two RRHs. At least one reference signal resource corresponding to a first RRH of the two RRHs is included in a first one of the two different CMR resource sets, and at least one reference signal resource corresponding to a second RRH of the two RRHs is included in a second one of the two different CMR resource sets, respectively.

For example, resource setting # 1 includes two CMR resource sets, namely, CMR resource set 1 and CMR resource set 2. The CMR resource set1 corresponds to RRH 1, and the CMR resource set 2 corresponds to RRH 2. At least one reference signal resource corresponding to RRH 1 may be included in the CMR resource set 1, and at least one reference signal resource corresponding to RRH 2 may be included in the CMR resource set 2, respectively. That is to say, the CMR resource set 1 includes at least one reference signal resource, and all reference signal resources included in the CMR resource set 1 correspond to RRH 1; the CMR resource set 2 includes at least one reference signal resource, and all reference signal resources included in the CMR resource set 2 correspond to RRH 2.

For example, if a network device intends to configure the terminal to report measurement results for RRH 1, RRH 2, and RRH 3, the network device may configure three resource settings, where resource setting 1 corresponds to the CMR resource sets of RRH 1 and RRH 2, resource setting 2 corresponds to the CMR resource sets of RRH 1 and RRH 3, and resource setting 3 corresponds to the CMR resource set of RRH 2 and RRH3.

Or, each resource setting may include one CMR resource set, which includes two CMR resource subsets that are in a one-to-one correspondence with two RRHs. At least one reference signal resource corresponding to a first RRH of the different RRHs is included in a first one of the two different CMR resource subsets, and at least one reference signal resource corresponding to a second RRH of the different RRHs is included in a second one of the two different CMR resource subsets.

For example, resource setting 1 includes one CMR resource set, which includes CMR resource subset 1 and CMR resource subset 2. The CMR resource subset 1 corresponds to RRH 1, and the CMR resource subset 2 corresponds to RRH 2. At least one reference signal resource corresponding to RRH 1 may be included in the CMR resource subset 1, and at least one reference signal resource corresponding to RRH 2 may be included in the CMR resource subset 2, respectively. That is to say, the CMR resource subset 1 includes at least one reference signal resource, and all reference signal resources included in the CMR resource subset 1 correspond to RRH 1; the CMR resource subset 2 includes at least one reference signal resource, and all reference signal resources included in the CMR resource subset 2 correspond to RRH 2.

For example, if the network device intends to configure the terminal to report measurement results for RRH 1, RRH 2, and RRH 3, the network device may configure three resource settings, where resource setting 1 corresponds to the CMR resource subsets of RRH 1 and RRH 2; resource setting 2 corresponds to the CMR resource subsets of RRH 1 and RRH 3; resource setting 3 corresponds to the CMR resource subsets of RRH 2 and RRH 3.

Step 62, second indication information is received.

The second indication information is used to implement at least one of:
activating or deactivating a resource associated with any resource setting; or
indicating a resource associated with any resource setting.

Optionally, the second indication information may be MAC CE information sent by the network device. The terminal may determine whether to activate or deactivate the resource associated with any resource setting based on the MAC CE information.

Optionally, the network device may activate or deactivate the resource associated with any resource setting through the MAC CE, or through activating or deactivating a reportconfig (report configuration) associated with the resource setting.

Or, the second indication information may be a DCI sent by the network device. In this case, the terminal may determine the resource associated with any resource setting based on the DCI.

Optionally, the network devices may indicate to perform a measurement based on the resource associated with any resource setting through the DCI, or by indicating a reportconfig associated with the resource setting.

After determining an available resource setting, the terminal may perform the beam measurement for the RRHs.

Step 63, a second measurement result report is sent, and the second measurement result report includes an identifier of at least one resource setting and a measurement result corresponding each resource setting.

Optionally, the measurement result may include a RS index and a corresponding measurement value. The RS includes a SSB or a CSI-RS. The measurement value includes a L1-RSRP or a L1-SINR.

Optionally, the measurement result corresponding to each resource setting may include multiple groups, and the two RSs in each group are RSs that the terminal can receive simultaneously. Different RSs in the two RSs correspond to different RRHs.

It can be understood that in the case where two CMR resource sets are in a one-to-one correspondence with two RRHs or two CMR resource subsets are in a one-to-one correspondence with two RRHs, two RRHs corresponding to each resource setting are fixed, and the measurement result corresponding to the resource setting reported by the terminal may include the RSs and measurement results of the two RRHs.

For example, if the network device intends the terminal to report the measurement results of RRH1, RRH2, and RRH3, the network device may configure three resource settings. Resource setting 1 corresponds to the CMR resource sets or CMR resource subsets of RRH 1 and RRH 2; resource setting2 corresponds to the CMR resource sets or CMR resource subsets of RRH 1 and RRH 3; and resource setting 3 corresponds to the CMR resource sets or CMR resource subsets of RRH 2 and RRH 3. So a measurement result for resource setting 1 is measurement results for RRH 1 and RRH 2. A measurement result for resource setting 2 is measurement results for RRH 1 and RRH 3. A measurement result for resource setting 3 is measurement results for RRH 2 and RRH 3.

Alternatively, the measurement result corresponding to each resource setting may include multiple groups, and RSs in different groups are RSs that the terminal can receive simultaneously.

It can be understood that in the case where two CMR resource sets are in a one-to-one correspondence with two RRHs, or two CMR resource subsets are in a one-to-one correspondence with two RRHs, two RRHs corresponding to each resource setting are fixed, and the measurement results corresponding to the resource settings reported by the terminal may include the RSs and measurement results of the two RRHs.

For example, if the network device intends the terminal to report the measurement results of RRH 1, RRH 2, and RRH 3, the network device may configure three resource settings. Resource setting 1 corresponds to the CMR resource sets or CMR resource subsets of RRH1 and RRH2; resource setting 2 corresponds to the CMR resource sets or CMR resource subsets of RRH 1 and RRH 3; and resource setting 3 corresponds to the CMR resource sets or CMR resource subsets of RRH 1 and RRH 3. So a measurement result for resource settingl is the measurement results for RRH 1 and RRH 2, a measurement results for resource setting 2 is the measurement results for RRH 1 and RRH 3, and a the measurement result for resource setting 3 is the measurement results for RRH 2 and RRH 3.

By implementing the embodiments of the disclosure, the terminal may first receive the configuration information, then determine the CMR resource set or CMR resource subset corresponding to each RRH based on the multiple resource settings included in the configuration information, and then determine an available resource setting based on the received second indication information. After perform the beam measurement, the second measurement result report may be sent to the network device. In this way, the beam measurement and reporting for multiple RRHs are realized, which not only ensures a coverage range of signals, but also improves a utilization rate of the RRHs.

As shown in FIG. 7, FIG. 7 is a flowchart of a method for beam measurement and reporting according to an embodiment of the disclosure. The method is performed by a network device. As shown in FIG. 7, the method includes, but is not limited to, the following steps.

Step 71, configuration information is sent, the configuration information includes at least two reference signal resources, and the at least two reference signal resources correspond to different RRHs.

It can be understood that in a case where a network device includes multiple RRHs, the network device may configure different reference signal resources for the multiple RRHs. At the same time, each RRH has a corresponding reference signal resource. Thus, beam measurement and reporting may be performed based on the reference signal resource corresponding to each RRH.

Optionally, different RRHs may correspond to at least one of: different transmission reception points (TRPs), different control resource set pools (CORESET Pool Indexes), or different antenna panels. That is to say, in embodiments of the disclosure, a RRH may be interchanged with a TRP, a CORESET Pool Index, or an antenna panel.

Optionally, different RRHs may correspond to the same Physical Cell Identifier (PCI), or different RRHs may correspond to different PCIs, which is not limited by the disclosure.

By implementing the embodiments of the disclosure, the network device sends the configuration information, the configuration information includes at least two reference signal resources, and the at least two reference signal resources correspond to different RRHs. In this way, the terminal can perform beam measurement and reporting based on the reference signal resource configured by the network device for each RRH, which not only ensures a coverage range of signals but also improves a utilization rate of the RRH.

As shown in FIG. 8, FIG. 8 is a flowchart of a method for beam measurement and reporting according to an embodiment of the disclosure. The method is performed by a network device. As shown in FIG. 8, the method includes, but is not limited to, the following steps.

Step 81, configuration information is sent, the configuration information includes one resource setting, the resource setting may be associated with a plurality of channel measurement resource (CMR) resource sets, and the plurality of CMR resource sets are in a one-to-one correspondence with the plurality of remote radio heads.

It should be noted that the reference signal resources corresponding to different RRHs are included in different CMR resource sets in the plurality of CMR resource sets, and the reference signal resource corresponding to the same RRH is included in the same CMR resource set. Each RRH corresponds to at least one reference signal resource.

Optionally, the plurality of CMR resource sets include two or more CMR resource sets.

It can be understood that each reference signal resource in the configuration information is included in one CMR resource set, and different reference signal resources may be included in the same CMR resource set or in different CMR resource sets.

For example, the configuration information includes a resource setting # 1, which is associated with CMR resource set 1, CMR resource set 2, and CMR resource set 3. The CMR resource set 1 corresponds to RRH 1, the CMR resource set 2 corresponds to RRH 2, and the CMR resource set 3 corresponds to RRH 3. At least one reference signal resource corresponding to RRH 1 may be included in the CMR resource set 1, at least one reference signal resource corresponding to RRH 2 may be included in the CMR resource set 2, and at least one reference signal resource corresponding to RRH 3 may be included in the CMR resource set 3, respectively. That is to say, the CMR resource set 1 includes at least one reference signal resource, and all reference signal resources included in the CMR resource set 1 correspond to the RRH 1. The CMR resource set 2 includes at least one reference signal resource, and all reference signal resources included in the CMR resource set 2 correspond to the RRH 2. The CMR resource set 3 includes at least one reference signal resource, and all reference signal resources included in the CMR resource set correspond to the RRH 3.

Step 82, first indication information is sent.

Optionally, the first indication information may be used to implement least one of:
activating or deactivating M CMR resource sets; or
indicating M CMR resource sets; where, M is a positive integer greater than or equal to 1.

It can be understood that M is a value less than or equal to the CMR resource set configured in the configuration information.

Optionally, the first indication information may be Medium Access Control (MAC) Control Element (CE) information sent by a network device. Or, the first indication information may be downlink control information (DCI) sent by the network device.

Optionally, the network device may activate or deactivate the M CMR resource sets through MAC CE, or through activating or activating a reportconfig (report configuration) associated with the M CMR resource sets.

Optionally, the network device may indicate to perform the measurement reporting based on the M CMR resource sets through the DCI, or it can be achieved by indicating a reportconfig associated with the M CMR resource sets.

After the network device sends the first indication information to the terminal, the terminal may perform beam measurement and reporting based on the M CMR resource sets.

Step 83, a first measurement result report is received.

Optionally, the first measurement result report may include multiple groups, N reference signals (RSs) in each group are RSs that the terminal can receive simultaneously.

N is a positive integer greater than or equal to 2, and different RSs in the N RSs correspond to different RRHs. The N RSs may correspond to two or more different RRHs, such as three, four, etc., which is not limited in the disclosure.

Or, the first measurement result report may include multiple groups, and RSs in different groups are RSs that the terminal can receive simultaneously.

For example, there are four RRHs, namely RRH 1, RRH 2, RRH 3, and RRH 4. Two RSs obtained from any two groups, such as Group 1 and Group 2, may correspond to RRH 1 and RRH 2 respectively, or RRH 1 and RRH 3 respectively, or RRH 1 and RRH 4 respectively, or RRH 2 and RRH 3 respectively, or RRH 2 and RRH 4 respectively, or RRH 3 and RRH 4 respectively, which is not limited in the disclosure.

Optionally, the first measurement result report may include a RS index and a corresponding measurement value. The RS includes a Synchronization Signal Block (SSB) or a Channel State Information Reference Signal (CSI-RS). The measurement value includes a layer-1 Reference Signal Receiving Power (L1-RSRP) or a layer-1 Signal to Interference Plus Noise Ratio (L1-SINR).

By implementing the embodiments of the disclosure, the network device may first send the configuration information to the terminal, so that the terminal can determine the CMR resource set corresponding to each RRH according to one resource setting associated with multiple CMR resource sets in the configuration information. Then, the first indication information is sent to the terminal, so that the terminal can perform beam measurement based on the CMR resource sets, and finally the first measurement result report sent by the terminal is received. In this way, the beam measurement and reporting for multiple RRHs are realized, which not only ensures a coverage range of signals, but also improves a utilization rate of the RRH.

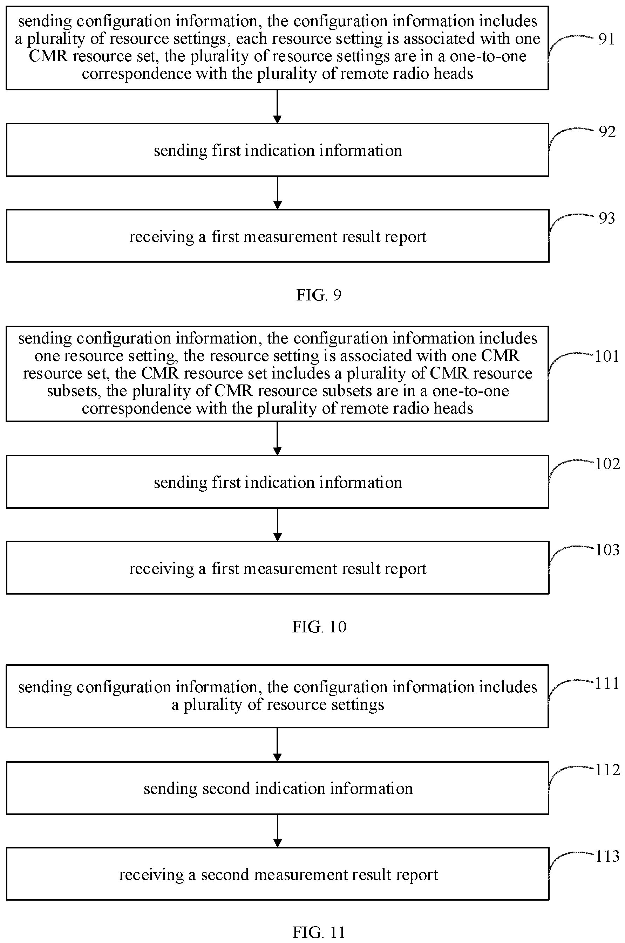

As shown in FIG. 9, FIG. 9 is a flowchart of a method for beam measurement and reporting according to an embodiment of the disclosure. The method is performed by a network device. As shown in FIG. 9, the method includes, but is not limited to, the following steps.

Step 91, configuration information is sent, the configuration information includes multiple resource settings, each resource setting is associated with one CMR resource set, and the multiple resource settings are in a one-to-one correspondence with multiple RRHs.

The reference signal resources corresponding to different RRHs are included in CMR resource sets associated with different resource settings in the multiple resource settings, and the reference signal resources corresponding to the same RRH are included in the same CMR resource set. Each RRH corresponds to at least one reference signal resource.

Optionally, multiple resource settings may include two or more resource settings.

It can be understood that each reference signal resource in the configuration information is included in one CMR resource set, and different reference signal resources are included in the same CMR resource set or in different CMR resource sets.

For example, the configuration information includes multiple resource settings, namely resource setting # 1, resource setting # 2, and resource setting # 3. The resource setting # 1 is associated with CMR resource set 1, the resource setting # 2 is associated with CMR resource set 2, and the resource setting # 3 is associated with CMR resource set 3. The resource setting # 1 corresponds to RRH 1, the resource setting # 2 corresponds to RRH 2, and the resource setting # 3 corresponds to RRH 3. At least one reference signal resource corresponding to RRH 1 may be included in the CMR resource set 1, at least one reference signal resource corresponding to RRH 2 may be included in CMR resource set 2, and at least one reference signal resource corresponding to RRH 3 may be included in CMR resource set 3, respectively. That is to say, the CMR resource set 1 includes at least one reference signal resource, and all reference signal resources included in the CMR resource set 1 correspond to the RRH 1; the CMR resource set 2 includes at least one reference signal resource, and all reference signal resources included in the CMR resource set 2 correspond to the RRH 2; the CMR resource set 3 includes at least one reference signal resource, and all reference signal resources included in the CMR resource set 3 correspond to the RRH 3.

Step 92, first indication information is sent.

Optionally, the first indication information is used to implement at least one of:
activating or deactivating M resource settings; or
indicating M resource settings; M is a positive integer greater than or equal to 1.

It can be understood that M is a value less than or equal to the resource setting included in the configuration information.

Optionally, the first indication information may be MAC CE information sent by the network device. Or, the first indication information may be DCI sent by the network device.

Optionally, the network device may activate or deactivate the M resource settings through MAC CE, or through activating or activating a reportconfig (report configuration) associated with the M resource settings.

Optionally, the network device may indicate to perform measurement based on the M resource settings, through the DCI, or by indicating a reportconfig associated with the M resource settings.

It can be understood that after the network device sends the first indication information to the terminal, the terminal can determine an available resource setting and then can perform a beam measurement for the RRHs.

Step 93, a first measurement result report is received.

Optionally, the first measurement result report may include multiple groups, and N reference signals (RSs) in each group are RSs that the terminal can receive simultaneously.

N is a positive integer greater than or equal to 2, and different RSs in the N RSs correspond to different RRHs.

Optionally, the N RSs may correspond to two or more different RRHs, such as three, four, etc., which is not limited in the disclosure.

Or, the first measurement result report may include multiple groups, and the RSs in different groups are RSs that the terminal can receive simultaneously.

For example, there are four RRHs, namely RRH 1, RRH 2, RRH 3, and RRH 4. Two RSs obtained from any two groups, such as Group 1 and Group 2, may correspond to RRH 1 and RRH 2 respectively, or RRH 1 and RRH 3 respectively, or RRH 1 and RRH 4 respectively, or RRH 2 and RRH 3 respectively, or RRH 2 and RRH 4 respectively, or RRH3 and RRH4 respectively, which is not limited in the disclosure.

Optionally, the first measurement result report may include a RS index and a corresponding measurement value. The RS includes a SSB or a CSI-RS, and the measurement value includes a L1 -RSRP or a L1 -SINR.

By implementing the embodiments of the disclosure, the network device may first send the configuration information, so that the terminal can determine the resource setting corresponding to each RRH according to each resource setting associated with the CMR resource set included in the configuration information, and then the network device sends the first indication information to the terminal, so that the terminal can perform the beam measurement based on the M resource settings. Finally, the network device receives the first measurement result report sent by the terminal. In this way, the beam measurement and reporting for multiple RRHs are realized, which not only ensures a coverage range of signals, but also improves a utilization rate of the RRHs.

As shown in FIG. 10, FIG. 10 is a flowchart of a method for beam measurement and reporting according to an embodiment of the disclosure. The method is performed by a terminal. As shown in FIG. 10, the method includes, but is not limited to, the following steps.

Step 101, configuration information is sent, the configuration information includes one resource setting, the resource setting is associated with one CMR resource set, the CMR resource set includes multiple CMR resource subsets, and multiple CMR resource subsets are in a one-to-one correspondence with multiple RRHs.

Reference signal resources corresponding to different RRHs are included in different CMR resource subsets of the multiple CMR resource subsets. Reference signal resources corresponding to the same RRH are included in the same CMR resource subset. Each RRH corresponds to at least one reference signal resource.

Optionally, multiple CMR resource subsets include two or more CMR resource subsets.

It can be understood that each reference signal resource in the configuration information is included in one CMR resource subset, and different reference signal resources are included in the same CMR resource subset or in different CMR resource subsets.

For example, the configuration information includes one resource setting that is associated with one CMR resource set. The CMR resource set includes CMR resource subset 1, CMR resource subset 2, and CMR resource subset 3. The CMR resource subset 1 corresponds to RRH 1, the CMR resource subset 2 corresponds to RRH 2, and the CMR resource subset 3 corresponds to RRH 3. At least one reference signal resource corresponding to RRH 1 may be included in the CMR resource subset 1, at least one reference signal resource corresponding to RRH 2 may be included in the CMR resource subset 2, and at least one reference signal resource corresponding to RRH 3 may be included in the CMR resource subset 3, respectively. That is to say, the CMR resource subset 1 includes at least one reference signal resource, and all reference signal resources included in the CMR resource subset 1 correspond to RRH 1; the CMR resource subset 2 includes at least one reference signal resource, and all reference signal resources included in the CMR resource subset 2 correspond to RRH 2; the CMR resource subset 3 includes at least one reference signal resource, and all reference signal resources included in the CMR resource subset 3 correspond to RRH 3.

Step 102, first indication information is sent.

Optionally, the first indication information is used to implement at least one of:
activating or deactivating M CMR resource subsets; or
indicating M CMR resource subsets; M is a positive integer greater than or equal to 1.

It can be understood that M is a value less than or equal to the CMR resource subset included in the configuration information.

Optionally, the first indication information may be MAC CE information sent by the network device. Or the first indication information may be DCI sent by the network device.

Optionally, the network device may activate or deactivate the M resource subsets through the MAC CE, or through activating or deactivating a reportconfig (report configuration) associated with the M resource subsets.

Optionally, the network device may indicate to perform the measurement based on the M resource subsets through the DCI, or by indicating a reportconfig associated with the M resource subsets.

It can be understood that after the network device sends the first indication information to the terminal, the terminal can determine an available CMR resource subset and then perform the beam measurement for the RRHs.

Step 103, a first measurement result report is received.

The specific implementation of step 103 may refer to the detailed description in other embodiments of the disclosure, and will not be elaborated here.

By implementing the embodiments of the disclosure, the network device can first send the configuration information, so that the terminal can determine the CMR resource subset corresponding to each RRH based on the one resource setting associated with the multiple CMR resource subsets in the configuration information, and the network device then sends the first indication information to the terminal, so that the terminal can perform the beam measurement based on M CMR resource subsets. Finally, the network device receives the first measurement result report sent by the terminal. In this way, the beam measurement and reporting for multiple RRHs are realized, which not only ensures a coverage range of the signals, but also improves a utilization rate of the RRHs.

As shown in FIG. 11, FIG. 11 is a flowchart of a method for beam measurement and reporting according to an embodiment of the disclosure. The method is performed by a terminal. As shown in FIG. 11, the method includes, but is not limited to, the following steps.

Step 101, configuration information is sent, and the configuration information includes multiple resource settings.

Optionally, each resource setting may include two CMR resource sets. The two CMR resource sets are in a one-to-one correspondence with two RRHs. At least one reference signal resource corresponding to a first RRH of the two RRHs is included in a first one of the two different CMR resource sets, and at least one reference signal resource corresponding to a second RRH of the two RRHs is included in a second one of the two different CMR resource sets, respectively.

For example, resource setting # 1 includes two CMR resource sets, namely, CMR resource set 1 and CMR resource set 2. The CMR resource set1 corresponds to RRH 1, and the CMR resource set 2 corresponds to RRH 2. At least one reference signal resource corresponding to RRH 1 may be included in the CMR resource set 1, and at least one reference signal resource corresponding to RRH 2 may be included in the CMR resource set 2, respectively. That is to say, the CMR resource set 1 includes at least one reference signal resource, and all reference signal resources included in the CMR resource set 1 correspond to RRH 1; the CMR resource set 2 includes at least one reference signal resource, and all reference signal resources included in the CMR resource set 2 correspond to RRH 2.

For example, if the network device intends to configure a terminal to report measurement results for RRH 1, RRH 2, and RRH 3, the network device may configure three resource settings, where resource setting 1 corresponds to the CMR resource sets of RRH 1 and RRH 2, resource setting 2 corresponds to the CMR resource sets of RRH 1 and RRH 3, and resource setting 3 corresponds to the CMR resource set of RRH 2 and RRH3.

Or, each resource setting may include one CMR resource set, which includes two CMR resource subsets that are in a one-to-one correspondence with two RRHs. At least one reference signal resource corresponding to a first RRH of the different RRHs is included in a first one of the two different CMR resource subsets, and at least one reference signal resource corresponding to a second RRH of the different RRHs is included in a second one of the two different CMR resource subsets.

For example, resource setting 1 includes one CMR resource set, which includes CMR resource subset 1 and CMR resource subset 2. The CMR resource subset 1 corresponds to RRH 1, and the CMR resource subset 2 corresponds to RRH 2. At least one reference signal resource corresponding to RRH 1 may be included in the CMR resource subset 1, and at least one reference signal resource corresponding to RRH 2 may be included in the CMR resource subset 2, respectively. That is to say, the CMR resource subset 1 includes at least one reference signal resource, and all reference signal resources included in the CMR resource subset 1 correspond to RRH 1; the CMR resource subset 2 includes at least one reference signal resource, and all reference signal resources included in the CMR resource subset 2 correspond to RRH 2.

For example, if the network device intends to configure the terminal to report measurement results for RRH 1, RRH 2, and RRH 3, the network device may configure three resource settings, where resource setting 1 corresponds to the CMR resource subsets of RRH 1 and RRH 2; resource setting 2 corresponds to the CMR resource subsets of RRH 1 and RRH 3; resource setting 3 corresponds to the CMR resource subsets of RRH 2 and RRH 3.

Step 112, second indication information is sent.

The second indication information is used to implement at least one of:
activating or deactivating a resource associated with any resource setting; or
indicating a resource associated with any resource setting.

Optionally, the second indication information may be MAC CE information sent by the network device. Or the second indication information may be DCI sent by the network device.

Optionally, the network device may activate or deactivate the resource associated with any resource setting through the MAC CE, or through activating or deactivating a reportconfig (report configuration) associated with the resource setting.

Optionally, the network devices may indicate to perform a measurement based on the resource associated with any resource setting through the DCI, or by indicating a reportconfig associated with the resource setting.

It can be understood that after the network device sends the first indication information to the terminal, the terminal may determine an available resource setting and then performs the beam measurement for the RRHs.

Step 113, a second measurement result report is received, and the second measurement result report includes an identifier of at least one resource setting and a measurement result corresponding each resource setting.

Optionally, the measurement result may include a RS index and a corresponding measurement value. The RS includes a SSB or a CSI-RS. The measurement value includes a L1-RSRP or a L1-SINR.

Optionally, the measurement result corresponding to each resource setting may include multiple groups, and the two RSs in each group are RSs that the terminal can receive simultaneously. Different RSs in the two RSs correspond to different RRHs.

It can be understood that in the case where two CMR resource sets are in a one-to-one correspondence with two RRHs, or where two CMR resource subsets are in a one-to-one correspondence with two RRHs, two RRHs corresponding to each resource setting are fixed, and the measurement result corresponding to the resource setting reported by the terminal may include the RSs and measurement results of the two RRHs.

For example, if the network device intends the terminal to report the measurement results of RRH1, RRH2, and RRH3, the network device may configure three resource settings. Resource setting 1 corresponds to the CMR resource sets or CMR resource subsets of RRH 1 and RRH 2; resource setting2 corresponds to the CMR resource sets or CMR resource subsets of RRH 1 and RRH 3; and resource setting 3 corresponds to the CMR resource sets or CMR resource subsets of RRH 2 and RRH 3. So a measurement result for resource setting 1 is measurement results for RRH 1 and RRH 2. A measurement result for resource setting 2 is measurement results for RRH 1 and RRH 3. A measurement result for resource setting 3 is measurement results for RRH 2 and RRH 3.

Alternatively, the measurement result corresponding to each resource setting may include multiple groups, and RSs in different groups are RSs that the terminal can receive simultaneously.

It can be understood that in the case where two CMR resource sets are in a one-to-one correspondence with two RRHs, or where two CMR resource subsets are in a one-to-one correspondence with two RRHs, two RRHs corresponding to each resource setting are fixed, and the measurement results corresponding to the resource settings reported by the terminal may include the RSs and measurement results of the two RRHs.

For example, if the network device intends the terminal to report the measurement results of RRH 1, RRH 2, and RRH 3, the network device may configure three resource settings. Resource setting 1 corresponds to the CMR resource sets or CMR resource subsets of RRH1 and RRH2; resource setting 2 corresponds to the CMR resource sets or CMR resource subsets of RRH 1 and RRH 3; and resource setting 3 corresponds to the CMR resource sets or CMR resource subsets of RRH 1 and RRH 3. So a measurement result for resource settingl is the measurement results for RRH 1 and RRH 2, a measurement results for resource setting 2 is the measurement results for RRH 1 and RRH 3, and a the measurement result for resource setting 3 is the measurement results for RRH 2 and RRH 3.

By implementing the embodiments of the disclosure, the network device may first send the configuration information to the terminal, so that the terminal can determine the CMR resource set or CMR resource subset corresponding to each RRH based on the multiple resource settings included in the configuration information, and then the network device may send the second indication information to the terminal, so that the terminal can perform the beam measurement based on M CMR resource sets or CMR resource subsets. Finally, the network device receives the second measurement result report sent by the terminal. In this way, the beam measurement and reporting for multiple RRHs are realized, which not only ensures a coverage range of signals, but also improves a utilization rate of the RRHs.

In the above embodiments provided in the disclosure, the methods provided in embodiments of the disclosure are introduced from perspectives of the network device and the terminal. In order to achieve the various functions of the method provided in the above embodiments of the disclosure, the network device and the terminal may include hardware structures and software modules, and may implement the above various functions in the form of hardware structures, software modules, or the hardware structures in combination with the software modules. A certain function of the above functions can be executed in the form of a hardware structure, a software module, or a hardware structure in combination with a software module.

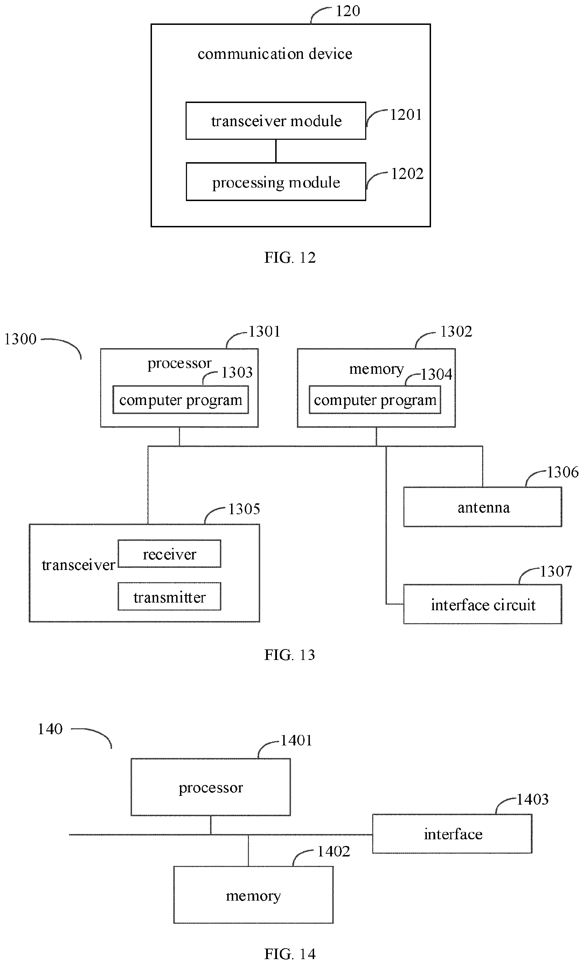

As illustrated in FIG. 12, FIG. 12 is a block diagram of a communication device 120 provided by an embodiment of the disclosure. The communication device 120 in FIG. 12 includes a processing module 1201 and a transceiver module 1202.

The transceiver module 1202 may include a sending module and/or a receiving module. The sending module is configured to implement a sending function, the receiving module is configured to implement a receiving function, and the transceiver module 1202 is configured to implement a sending and/or receiving function.

It can be understood that communication device 120 may be a terminal, a device within the terminal, or a device that can be matched and used with the terminal.

The communication device 120, at the terminal side, includes:
a transceiver module 1202, configured to receive configuration information, in which the configuration information includes at least two reference signal resources, and the at least two reference signal resources correspond to different remote radio heads respectively.

Optionally, the different remote radio heads correspond to at least one of: different transmission and reception points; different control resource set pools; or different antenna panels.

Optionally,
the configuration information includes one resource setting, in which the resource setting is associated with a plurality of channel measurement resource (CMR) resource sets, the plurality of CMR resource sets are in a one-to-one correspondence with the plurality of remote radio heads, and the reference signal resources corresponding to different remote radio heads are included in different CMR resource sets in the plurality of CMR resource sets;
or the configuration information includes a plurality of resource settings, in which each resource setting is associated with one CMR resource set, the plurality of resource settings are in a one-to-one correspondence with the plurality of remote radio heads, and reference signal resources corresponding to different remote radio heads are included in CMR resource sets associated with different resource settings in the plurality of resource settings;
or the configuration information includes one resource setting, in which the resource setting is associated with one CMR resource set, in which the CMR resource set includes a plurality of CMR resource subsets, the plurality of CMR resource subsets are in a one-to-one correspondence with the plurality of remote radio heads, and reference signal resources corresponding to different remote radio heads are included in different CMR resource subsets in the plurality of CMR resource subsets.

Optionally, the transceiver module 1202 is configured to:
receive first indication information, in which the first indication information is used to implement at least one of:
activating or deactivating M CMR resource sets;
activating or deactivating M CMR resource subsets;
activating or deactivating M resource settings;
indicating M CMR resource sets;
indicating M CMR resource subsets; or
indicating M resource settings; in which, M is a positive integer greater than or equal to 1.

Optionally, the transceiver module 1202 is configured to::
send a first measurement result report;
in which the first measurement result report includes a plurality of groups, N reference signals (RSs) in each group are able to be simultaneously received by the terminal, N is a positive integer greater than or equal to 2, and different reference signals in the N reference signals correspond to different remote radio heads; or the first measurement result report includes a plurality of groups, and reference signals in different groups are able to be simultaneously received by the terminal.

Optionally,
the configuration information includes a plurality of resource settings, in which each resource setting includes two CMR resource sets, the two CMR resource sets are in a one-to-one correspondence with two remote radio heads, and at least one reference signal resource corresponding to different remote radio heads are contained in different CMR resource sets in the two CMR resource sets respectively;
or the configuration information includes a plurality of resource settings, in which each resource setting includes one CMR resource set, the CMR resource set includes two CMR resource subsets, the two CMR resource subsets are in a one-to-one correspondence with two remote radio heads, and at least one reference signal resource corresponding to different remote radio heads are contained in different CMR resource subsets in the two CMR resource subsets respectively.

Optionally, the transceiver module 1202 is configured to:
receive second indication information, in which the second indication information is used to implement at least one of:
activating or deactivating a resource associated with any resource setting; or
indicating a resource associated with any resource setting.

Optionally, the transceiver module 1202 is configured to:
send a second measurement result report, in which the second measurement result report includes an identifier of at least one resource setting and a measurement result corresponding to each resource setting.

Optionally,
the measurement result corresponding to each resource setting includes a plurality of groups, and two reference signals in each group are able to be simultaneously received by the terminal, in which different reference signals in the two reference signals correspond to different remote radio heads;
or the measurement result corresponding to each resource setting includes a plurality of groups, and reference signals in different groups are able to be simultaneously received by the terminal.

Optionally, the measurement result includes an index of a reference signal and a corresponding measurement value, the reference signal includes a synchronization signal block (SSB) or a channel state information-reference signal (CSI-RS), the measurement value includes a layer-1 reference signal reception power (L1-RSRP) or a layer-1 signal to interference noise ratio (L1-SINR).

Optionally, different remote radio heads correspond to a same physical cell identifier (PCI), or different remote radio heads correspond to different PCIs.

With the communication device provided by the disclosure, the terminal receives the configuration information, the configuration information includes at least two reference signal resources, and the at least two reference signal resources correspond to different RRHs. In this way, the terminal can perform beam measurement and reporting based on the reference signal resource configured by the network device for each RRH, which not only ensures a coverage range of signals but also improves a utilization rate of the RRH.

It can be understood that communication device 120 may be a network device, a device within the network device, or a device that can be matched and used with the network device.

The communication device 120, at the network device side, includes:
a transceiver module 1202, configured to send configuration information, in which the configuration information includes at least two reference signal resources, and the at least two reference signal resources correspond to different remote radio heads respectively.

Optionally, the different remote radio heads correspond to at least one of: different transmission and reception points; different control resource set pools; or different antenna panels.

Optionally,
the configuration information includes one resource setting, in which the resource setting is associated with a plurality of channel measurement resource (CMR) resource sets, the plurality of CMR resource sets are in a one-to-one correspondence with the plurality of remote radio heads, and reference signal resources corresponding to different remote radio heads are included in different CMR resource sets in the plurality of CMR resource sets;
or the configuration information includes a plurality of resource settings, in which each resource setting is associated with one CMR resource set, the plurality of resource settings are in a one-to-one correspondence with the plurality of remote radio heads, and reference signal resources corresponding to different remote radio heads are included in CMR resource sets associated with different resource settings in the plurality of resource settings;
or the configuration information includes one resource setting, in which the resource setting is associated with one CMR resource set, in which the CMR resource set includes a plurality of CMR resource subsets, the plurality of CMR resource subsets are in a one-to-one correspondence with the plurality of remote radio heads, and reference signal resources corresponding to different remote radio heads are included in different CMR resource subsets in the plurality of CMR resource subsets.

Optionally, the transceiver module 1202 is configured to:
send first indication information, in which the first indication information is used to implement at least one of:
activating or deactivating M CMR resource sets;
activating or deactivating M CMR resource subsets;
activating or deactivating M resource settings;
indicating M CMR resource sets;
indicating M CMR resource subsets; or
indicating M resource settings; in which, M is a positive integer greater than or equal to 1.

Optionally, in which the transceiver module 1202 is configured to:
receive a first measurement result report;
in which the first measurement result report includes a plurality of groups, N reference signals (RSs) in each group are able to be simultaneously received by the terminal, N is a positive integer greater than or equal to 2, and different reference signals in the N reference signals correspond to different remote radio heads; or the first measurement result report includes a plurality of groups, and reference signals in different groups are able to be simultaneously received by the terminal.

Optionally,
the configuration information includes a plurality of resource settings, in which each resource setting includes two CMR resource sets, the two CMR resource sets are in a one-to-one correspondence with two remote radio heads, and at least one reference signal resource corresponding to different remote radio heads are contained in different CMR resource sets in the two CMR resource sets respectively;
or the configuration information includes a plurality of resource settings, in which each resource setting includes one CMR resource set, the CMR resource set includes two CMR resource subsets, the two CMR resource subsets are in a one-to-one correspondence with two remote radio heads, and at least one reference signal resource corresponding to different remote radio heads are contained in different CMR resource subsets in the two CMR resource subsets respectively.

Optionally, the transceiver module 1202 is configured to:
send second indication information, in which the second indication information is used to implement at least one of:
activating or deactivating a resource associated with any resource setting; or
indicating a resource associated with any resource setting.

Optionally, the transceiver module 1202 is configured to:
receive a second measurement result report, in which the second measurement result report includes an identifier of at least one resource setting and a measurement result corresponding to each resource setting.

Optionally,
the measurement result corresponding to each resource setting includes a plurality of groups, and two reference signals in each group are able to be simultaneously received by the terminal, in which different reference signals in the two reference signals correspond to different remote radio heads;
or the measurement result corresponding to each resource setting includes a plurality of groups, and reference signals in different groups are able to be simultaneously received by the terminal.

Optionally, the measurement result includes an index of a reference signal and a corresponding measurement value, the reference signal includes a synchronization signal block (SSB) or a channel state information-reference signal (CSI-RS), the measurement value includes a layer-1 reference signal reception power (L1-RSRP) or a layer-1 signal to interference noise ratio (L1-SINR).

Optionally, different remote radio heads correspond to a same physical cell identifier (PCI), or different remote radio heads correspond to different PCIs.

With the communication device provided by the disclosure, the network device sends the configuration information, the configuration information includes at least two reference signal resources, and the at least two reference signal resources correspond to different RRHs. In this way, the terminal can perform beam measurement and reporting based on the reference signal resource configured by the network device for each RRH, which not only ensures a coverage range of signals but also improves a utilization rate of the RRH.

As illustrated in FIG. 13, FIG. 13 is a schematic diagram of a communication device 130 provided by an embodiment of the disclosure. The communication device 130 may be a network device or a terminal, or may be a chip, a chip system or a processor that supports the network device to realize the above-described methods, or may be a chip, a chip system or a processor that supports the terminal to realize the above-described methods. The device may be used to realize the methods described in the above method embodiments with reference to the description of the above-described method embodiments.

The communication device 130 may include one or more processors 1301. The processor 1301 may be a general-purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a distributed unit (DU), or a central unit (CU)), executing computer programs, and processing data of the computer programs.

Optionally, the communication device 130 may include one or more memories 1302 on which a computer program 1304 may be stored. The processor 1301 executes the computer program 1304 to cause the communication device 130 to perform the methods described in the above method embodiments. Optionally, the memory 1302 may also store data. The communication device 130 and the memory 1302 may be provided separately or may be integrated together.

Optionally, the communication device 130 may also include a transceiver 1305 and an antenna 1306. The transceiver 1305 may be referred to as a transceiver unit, a transceiver machine, or a transceiver circuit, for realizing a transceiver function. The transceiver 1305 may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device 130 may also include one or more interface circuits 1307. The interface circuits 1307 are used to receive code instructions and transmit them to the processor 1301. The processor 1301 runs the code instructions to cause the communication device 130 to perform the method described in the method embodiments.

The communication device 130 is a terminal. The transceiver 1305 is configured to perform step 21 in FIG. 2, step 31, step 32 and step 33 in FIG. 3, step 41, step 42 and step 43 in FIG. 4, step 51, step 52 and step 53 in FIG. 5, etc.

The communication device 130 is a network device. The transceiver 1301 is configured to perform step 71 in FIG. 1, step 81, step 82 and step 83 in FIG. 8, step 91, or step 92 and step 93 in FIG. 9, etc.

In an implementation, the processor 1301 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1301 may store a computer program 1303. When the computer program 1303 runs on the processor 1301, the communication device 130 may be caused to perform the methods described in the method embodiments above. The computer program 1303 may be solidified in the processor 1301, and in such case the processor 1301 may be implemented by hardware.

In an implementation, the communication device 130 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal, but the scope of the communication device described in the disclosure is not limited thereto, and the structure of the communication device may not be limited by FIG. 14. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

A case where the communication device may be a chip or a chip system is described with reference to the schematic structure of the chip shown in FIG. 14. The chip shown in FIG. 14 includes a processor 1401 and an interface 1402. There may be one or more processors 1401, and there may be multiple interfaces 1402.

In the case where the chip is used to implement the function of the terminal in the embodiments of the disclosure:
the interface 1402 is used to perform step 21 in FIG. 2, step 31, step 32 and step 33 in FIG. 3, step 41, step 42 and step 43 in FIG. 4, or step 51, step 52 and step 53 in FIG. 5, etc.

In the case where the chip is used to implement the function of the network device in the embodiments of the disclosure:
the interface 1402 is used to perform step 71 in FIG. 7, step 81, step 82 and step 83 in FIG. 8, or step 91, step 92 and step 93 in FIG. 9, etc.

Optionally, the chip further includes a memory 1403 used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the disclosure also provide a communication system. The system includes the communication device as a terminal and the communication device as a network device in the aforementioned embodiment of FIG. 12. Or, the system includes the communication device as a terminal and the communication device as a network device in the aforementioned embodiment of FIG. 13.

The disclosure also provides a computer-readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, and not to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

The correspondences shown in the tables in the disclosure can be configured or predefined. The values of information in each table are only examples and can be configured to other values, which are not limited by this disclosure. When configuring the correspondence between information and various parameters, it is not necessary to configure all the correspondence shown in each table. For example, in the tables in the disclosure, some correspondence relationships shown in certain rows may not be configured. For example, appropriate deformation adjustments can be made based on the above table, such as splitting, merging, etc. The names of the parameters shown in the titles of the above tables can also use other names that can be understood by the communication device, and the values or representations of the parameters can be other values or representations that can be understood by the communication device. When implementing the above tables, other data structures can be used, such as arrays, queues, containers, stacks, linear tables, pointers, linked lists, trees, graphs, structures, classes, heaps, hash lists, or hash tables.

The term "predefine" in this disclosure may be understood as define, pre-define, store, pre-store, pre-negotiate, pre-configure, solidify, or pre-fire.

Those skilled in the art may realize that the units and steps of the various examples described in combination with the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above can be referred to the corresponding processes in the preceding method embodiments, and will not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

## Claims

1. A method for beam measurement and reporting, performed by a terminal, comprising:
receiving configuration information, wherein the configuration information comprises at least two reference signal resources, and the at least two reference signal resources correspond to different remote radio heads respectively.

2. The method of claim 1, wherein the different remote radio heads correspond to at least one of:
different transmission and reception points;
different control resource set pools; or
different antenna panels.

3. The method of claim 1, wherein,
the configuration information comprises one resource setting, wherein the resource setting is associated with a plurality of channel measurement resource (CMR) resource sets, the plurality of CMR resource sets are in a one-to-one correspondence with a plurality of remote radio heads, and the reference signal resources corresponding to different remote radio heads are comprised in different CMR resource sets in the plurality of CMR resource sets;
or
the configuration information comprises a plurality of resource settings, wherein each resource setting is associated with one CMR resource set, the plurality of resource settings are in a one-to-one correspondence with the plurality of remote radio heads, and reference signal resources corresponding to different remote radio heads are comprised in CMR resource sets associated with different resource settings in the plurality of resource settings;
or
the configuration information comprises one resource setting, wherein the resource setting is associated with one CMR resource set, wherein the CMR resource set comprises a plurality of CMR resource subsets, the plurality of CMR resource subsets are in a one-to-one correspondence with the plurality of remote radio heads, and reference signal resources corresponding to different remote radio heads are comprised in different CMR resource subsets in the plurality of CMR resource subsets.

4. The method of claim 3, further comprising:
receiving first indication information, wherein the first indication information is used to implement at least one of:
activating or deactivating M CMR resource sets;
activating or deactivating M CMR resource subsets;
activating or deactivating M resource settings;
indicating M CMR resource sets;
indicating M CMR resource subsets; or
indicating M resource settings; wherein, M is a positive integer greater than or equal to 1.

5. The method of claim 4, further comprising:
sending a first measurement result report;
wherein the first measurement result report comprises a plurality of groups, N reference signals (RSs) in each group are able to be simultaneously received by the terminal, N is a positive integer greater than or equal to 2, and different reference signals in the N reference signals correspond to different remote radio heads; or the first measurement result report comprises a plurality of groups, and reference signals in different groups are able to be simultaneously received by the terminal.

6. The method of claim 1, wherein,
the configuration information comprises a plurality of resource settings, wherein each resource setting comprises two CMR resource sets, the two CMR resource sets are in a one-to-one correspondence with two remote radio heads, and at least one reference signal resource corresponding to different remote radio heads are contained in different CMR resource sets in the two CMR resource sets respectively;
or
the configuration information comprises a plurality of resource settings, wherein each resource setting comprises one CMR resource set, the one CMR resource set comprises two CMR resource subsets, the two CMR resource subsets are in a one-to-one correspondence with two remote radio heads, and at least one reference signal resource corresponding to different remote radio heads are contained in different CMR resource subsets in the two CMR resource subsets respectively.

7. The method of claim 6, further comprising:
receiving second indication information, wherein the second indication information is used to implement at least one of:
activating or deactivating a resource associated with any resource setting; or
indicating a resource associated with any resource setting.

8. The method of claim 6, further comprising:
sending a second measurement result report, wherein the second measurement result report comprises an identifier of at least one resource setting and a measurement result corresponding to each resource setting.

9. The method of claim 8, wherein,
the measurement result corresponding to each resource setting comprises a plurality of groups, and two reference signals in each group are able to be simultaneously received by the terminal, wherein different reference signals in the two reference signals correspond to different remote radio heads;
or
the measurement result corresponding to each resource setting comprises a plurality of groups, and reference signals in different groups are able to be simultaneously received by the terminal.

10. The method of claim 5 or 9, wherein the measurement result comprises an index of a reference signal and a corresponding measurement value, the reference signal comprises a synchronization signal block (SSB) or a channel state information-reference signal (CSI-RS), the measurement value comprises a layer-1 reference signal reception power (L1-RSRP) or a layer-1 signal to interference noise ratio (L1-SINR).

11. The method of any one of claims 1-10, wherein different remote radio heads correspond to a same physical cell identifier (PCI), or different remote radio heads correspond to different PCIs.

12. A method for beam measurement and reporting, performed by a network device, comprising:
sending configuration information, wherein the configuration information comprises at least two reference signal resources, and the at least two reference signal resources correspond to different remote radio heads respectively.

13. The method of claim 12, wherein the different remote radio heads correspond to at least one of:
different transmission and reception points;
different control resource set pools; or
different antenna panels.

14. The method of claim 12, wherein,
the configuration information comprises one resource setting, wherein the resource setting is associated with a plurality of channel measurement resource (CMR) resource sets, the plurality of CMR resource sets are in a one-to-one correspondence with a plurality of remote radio heads, and reference signal resources corresponding to different remote radio heads are comprised in different CMR resource sets in the plurality of CMR resource sets;
or
the configuration information comprises a plurality of resource settings, wherein each resource setting is associated with one CMR resource set, the plurality of resource settings are in a one-to-one correspondence with the plurality of remote radio heads, and reference signal resources corresponding to different remote radio heads are comprised in CMR resource sets associated with different resource settings in the plurality of resource settings;
or
the configuration information comprises one resource setting, wherein the resource setting is associated with one CMR resource set, wherein the CMR resource set comprises a plurality of CMR resource subsets, the plurality of CMR resource subsets are in a one-to-one correspondence with the plurality of remote radio heads, and reference signal resources corresponding to different remote radio heads are comprised in different CMR resource subsets in the plurality of CMR resource subsets.

15. The method of claim 14, further comprising:
sending first indication information, wherein the first indication information is used to implement at least one of:
activating or deactivating M CMR resource sets;
activating or deactivating M CMR resource subsets;
activating or deactivating M resource settings;
indicating M CMR resource sets;
indicating M CMR resource subsets; or
indicating M resource settings; wherein, M is a positive integer greater than or equal to 1.

16. The method of claim 15, further comprising:
receiving a first measurement result report;
wherein the first measurement result report comprises a plurality of groups, N reference signals (RSs) in each group are able to be simultaneously received by a terminal, N is a positive integer greater than or equal to 2, and different reference signals in the N reference signals correspond to different remote radio heads; or the first measurement result report comprises a plurality of groups, and reference signals in different groups are able to be simultaneously received by the terminal.

17. The method of claim 12, wherein,
the configuration information comprises a plurality of resource settings, wherein each resource setting comprises two CMR resource sets, the two CMR resource sets are in a one-to-one correspondence with two remote radio heads, and at least one reference signal resource corresponding to different remote radio heads are contained in different CMR resource sets in the two CMR resource sets respectively;
or
the configuration information comprises a plurality of resource settings, wherein each resource setting comprises one CMR resource set, the one CMR resource set comprises two CMR resource subsets, the two CMR resource subsets are in a one-to-one correspondence with two remote radio heads, and at least one reference signal resource corresponding to different remote radio heads are contained in different CMR resource subsets in the two CMR resource subsets respectively.

18. The method of claim 17, further comprising:
sending second indication information, wherein the second indication information is used to implement at least one of:
activating or deactivating a resource associated with any resource setting; or
indicating a resource associated with any resource setting.

19. The method of claim 17, further comprising:
receiving a second measurement result report, wherein the second measurement result report comprises an identifier of at least one resource setting and a measurement result corresponding to each resource setting.

20. The method of claim 19, wherein,
the measurement result corresponding to each resource setting comprises a plurality of groups, and two reference signals in each group are able to be simultaneously received by a terminal, wherein different reference signals in the two reference signals correspond to different remote radio heads;
or
the measurement result corresponding to each resource setting comprises a plurality of groups, and reference signals in different groups are able to be simultaneously received by the terminal.

21. The method of claim 16 or 20, wherein the measurement result comprises an index of a reference signal and a corresponding measurement value, the reference signal comprises a synchronization signal block (SSB) or a channel state information-reference signal (CSI-RS), the measurement value comprises a layer-1 reference signal reception power (L1-RSRP) or a layer-1 signal to interference noise ratio (L1-SINR).

22. The method of any one of claims 12-21, wherein different remote radio heads correspond to a same physical cell identifier (PCI), or different remote radio heads correspond to different PCIs.

23. A communication device, performed at a terminal, comprising:
a transceiver module, configured to receive configuration information, wherein the configuration information comprises at least two reference signal resources, and the at least two reference signal resources correspond to different remote radio heads respectively.

24. The communication device of claim 23, wherein the different remote radio heads correspond to at least one of:
different transmission and reception points;
different control resource set pools; or
different antenna panels.

25. The communication device of claim 23, wherein,
the configuration information comprises one resource setting, wherein the resource setting is associated with a plurality of channel measurement resource (CMR) resource sets, the plurality of CMR resource sets are in a one-to-one correspondence with a plurality of remote radio heads, and the reference signal resources corresponding to different remote radio heads are comprised in different CMR resource sets in the plurality of CMR resource sets;
or
the configuration information comprises a plurality of resource settings, wherein each resource setting is associated with one CMR resource set, the plurality of resource settings are in a one-to-one correspondence with the plurality of remote radio heads, and reference signal resources corresponding to different remote radio heads are comprised in CMR resource sets associated with different resource settings in the plurality of resource settings;
or
the configuration information comprises one resource setting, wherein the resource setting is associated with one CMR resource set, wherein the CMR resource set comprises a plurality of CMR resource subsets, the plurality of CMR resource subsets are in a one-to-one correspondence with the plurality of remote radio heads, and reference signal resources corresponding to different remote radio heads are comprised in different CMR resource subsets in the plurality of CMR resource subsets.

26. The communication device of claim 25, wherein the transceiver module is configured to:
receive first indication information, wherein the first indication information is used to implement at least one of:
activating or deactivating M CMR resource sets;
activating or deactivating M CMR resource subsets;
activating or deactivating M resource settings;
indicating M CMR resource sets;
indicating M CMR resource subsets; or
indicating M resource settings; wherein, M is a positive integer greater than or equal to 1.

27. The communication device of claim 26, wherein the transceiver module is configured to::
send a first measurement result report;
wherein the first measurement result report comprises a plurality of groups, N reference signals (RSs) in each group are able to be simultaneously received by the terminal, N is a positive integer greater than or equal to 2, and different reference signals in the N reference signals correspond to different remote radio heads; or the first measurement result report comprises a plurality of groups, and reference signals in different groups are able to be simultaneously received by the terminal.

28. The communication device of claim 23, wherein,
the configuration information comprises a plurality of resource settings, wherein each resource setting comprises two CMR resource sets, the two CMR resource sets are in a one-to-one correspondence with two remote radio heads, and at least one reference signal resource corresponding to different remote radio heads are contained in different CMR resource sets in the two CMR resource sets respectively;
or
the configuration information comprises a plurality of resource settings, wherein each resource setting comprises one CMR resource set, the one CMR resource set comprises two CMR resource subsets, the two CMR resource subsets are in a one-to-one correspondence with two remote radio heads, and at least one reference signal resource corresponding to different remote radio heads are contained in different CMR resource subsets in the two CMR resource subsets respectively.

29. The communication device of claim 28, wherein the transceiver module is configured to:
receive second indication information, wherein the second indication information is used to implement at least one of:
activating or deactivating a resource associated with any resource setting; or
indicating a resource associated with any resource setting.

30. The communication device of claim 28, wherein the transceiver module is configured to:
send a second measurement result report, wherein the second measurement result report comprises an identifier of at least one resource setting and a measurement result corresponding to each resource setting.

31. The communication device of claim 30, wherein,
the measurement result corresponding to each resource setting comprises a plurality of groups, and two reference signals in each group are able to be simultaneously received by the terminal, wherein different reference signals in the two reference signals correspond to different remote radio heads;
or
the measurement result corresponding to each resource setting comprises a plurality of groups, and reference signals in different groups are able to be simultaneously received by the terminal.

32. The communication device of claim 27 or 31, wherein the measurement result comprises an index of a reference signal and a corresponding measurement value, the reference signal comprises a synchronization signal block (SSB) or a channel state information-reference signal (CSI-RS), the measurement value comprises a layer-1 reference signal reception power (L1-RSRP) or a layer-1 signal to interference noise ratio (L1-SINR).

33. The communication device of any one of claims 23-32, wherein different remote radio heads correspond to a same physical cell identifier (PCI), or different remote radio heads correspond to different PCIs.

34. A communication device, performed at a network device, comprising:
a transceiver module, configured to send configuration information, wherein the configuration information comprises at least two reference signal resources, and the at least two reference signal resources correspond to different remote radio heads respectively.

35. The communication device of claim 34, wherein the different remote radio heads correspond to at least one of:
different transmission and reception points;
different control resource set pools; or
different antenna panels.

36. The communication device of claim 34, wherein,
the configuration information comprises one resource setting, wherein the resource setting is associated with a plurality of channel measurement resource (CMR) resource sets, the plurality of CMR resource sets are in a one-to-one correspondence with a plurality of remote radio heads, and reference signal resources corresponding to different remote radio heads are comprised in different CMR resource sets in the plurality of CMR resource sets;
or
the configuration information comprises a plurality of resource settings, wherein each resource setting is associated with one CMR resource set, the plurality of resource settings are in a one-to-one correspondence with the plurality of remote radio heads, and reference signal resources corresponding to different remote radio heads are comprised in CMR resource sets associated with different resource settings in the plurality of resource settings;
or
the configuration information comprises one resource setting, wherein the resource setting is associated with one CMR resource set, wherein the CMR resource set comprises a plurality of CMR resource subsets, the plurality of CMR resource subsets are in a one-to-one correspondence with the plurality of remote radio heads, and reference signal resources corresponding to different remote radio heads are comprised in different CMR resource subsets in the plurality of CMR resource subsets.

37. The communication device of claim 36, wherein the transceiver module is configured to:
send first indication information, wherein the first indication information is used to implement at least one of:
activating or deactivating M CMR resource sets;
activating or deactivating M CMR resource subsets;
activating or deactivating M resource settings;
indicating M CMR resource sets;
indicating M CMR resource subsets; or
indicating M resource settings; wherein, M is a positive integer greater than or equal to 1.

38. The communication device of claim 37, wherein the transceiver module is configured to:
receive a first measurement result report;
wherein the first measurement result report comprises a plurality of groups, N reference signals (RSs) in each group are able to be simultaneously received by a terminal, N is a positive integer greater than or equal to 2, and different reference signals in the N reference signals correspond to different remote radio heads; or the first measurement result report comprises a plurality of groups, and reference signals in different groups are able to be simultaneously received by the terminal.

39. The communication device of claim 34, wherein,
the configuration information comprises a plurality of resource settings, wherein each resource setting comprises two CMR resource sets, the two CMR resource sets are in a one-to-one correspondence with two remote radio heads, and at least one reference signal resource corresponding to different remote radio heads are contained in different CMR resource sets in the two CMR resource sets respectively;
or
the configuration information comprises a plurality of resource settings, wherein each resource setting comprises one CMR resource set, the one CMR resource set comprises two CMR resource subsets, the two CMR resource subsets are in a one-to-one correspondence with two remote radio heads, and at least one reference signal resource corresponding to different remote radio heads are contained in different CMR resource subsets in the two CMR resource subsets respectively.

40. The communication device of claim 39, wherein the transceiver module is configured to:
send second indication information, wherein the second indication information is used to implement at least one of:
activating or deactivating a resource associated with any resource setting; or
indicating a resource associated with any resource setting.

41. The communication device of claim 39, wherein the transceiver module is configured to:
receive a second measurement result report, wherein the second measurement result report comprises an identifier of at least one resource setting and a measurement result corresponding to each resource setting.

42. The communication device of claim 41, wherein,
the measurement result corresponding to each resource setting comprises a plurality of groups, and two reference signals in each group are able to be simultaneously received by a terminal, wherein different reference signals in the two reference signals correspond to different remote radio heads;
or
the measurement result corresponding to each resource setting comprises a plurality of groups, and reference signals in different groups are able to be simultaneously received by the terminal.

43. The communication device of claim 38 or 42, wherein the measurement result comprises an index of a reference signal and a corresponding measurement value, the reference signal comprises a synchronization signal block (SSB) or a channel state information-reference signal (CSI-RS), the measurement value comprises a layer-1 reference signal reception power (L1-RSRP) or a layer-1 signal to interference noise ratio (L1-SINR).

44. The communication device of any one of claims 34-43, wherein different remote radio heads correspond to a same physical cell identifier (PCI), or different remote radio heads correspond to different PCIs.

45. A communication device, comprising:
a processor; and
a memory having a computer program stored thereon;
wherein the processor performs the computer program to cause the communication device to perform the method of any one of claims 1-11.

46. A communication device, comprising:
a processor; and
a memory having a computer program stored thereon;
wherein the processor performs computer program to cause the communication device to perform the method of any one of claims 12-22.

47. A communication device, comprises: a processor and an interface circuit, wherein
the interface circuit is configured to receive code instructions and transmit the code instructions to the processor; and
the processor is configured to run the code instructions to perform the method of any one of claims 1-11.

48. A communication device, comprises: a processor and an interface circuit, wherein
the interface circuit is configured to receive code instructions and transmit the code instructions to the processor; and
the processor is configured to run the code instructions to perform the method of any one of claims 12-22.

49. A computer-readable storage medium for storing instructions, wherein when the instructions are executed, the method of any one of claims 1-11 is implemented.

50. A computer-readable storage medium for storing instructions, wherein when the instructions are executed, the method of any one of claims 12-22 is implemented.
